# EUROPÄISCHE PATENTSCHRIFT

(11) **EP 1 158 011 B1**
(45) Veröffentlichungstag und Bekanntmachung des Hinweises auf die Patenterteilung: **08.02.2006**
(21) Anmeldenummer: 01103283.6
(22) Anmeldetag: 13.02.2001
(51) Int. Cl.: C08G 18/08

(54) **Verfahren zur Herstellung von Polyurethan-Formkörpern**
Process for making Polyurethane moulded products
Methode de production de pièces moulées de polyuréthane

(30) Priorität: 26.05.2000 DE 10025932
(43) Veröffentlichungstag der Anmeldung: 28.11.2001
(73) Patentinhaber: Carl Freudenberg KG, 69469 Weinheim (DE); Intier Automotive Eybl Interiors GmbH, 94315 Straubing (DE)
(72) Erfinder: Mühlfeld, Horst, 64689 Grasellenbch (DE); Schauber, Thomas, 69502 Hsmsbach (DE); Wagener, Silke, Dr., 69469 Weinheim (DE)

(56) Entgegenhaltungen:
- EP-A- 0 012 414
- EP-A- 0 417 581
- EP-A- 0 922 719
- DE-A- 4 115 508

## Beschreibung

Die Erfindung betrifft ein Verfahren zur Herstellung von Polyurethan-Formkörpern, die eine hohe Lichtechtheit sowie eine verbesserte Temperaturstabilität aufweisen, und die Verwendung derartig hergestellter Polyurethan-Formkörper.

Aus den Dokumenten DE 26 58 136 und DE 42 03 307 sind thermoplastisch verarbeitbare Formmassen bekannt, die aus. Gemischen verschiedener aliphatischer Polyole und 1,6-Hexamethylendiisocyanat mit Kettenverlängerungsmitteln wie 1,4-Butandiol bestehen. Die dort beschriebenen Polyurethan-Formmassen können insbesondere zur Herstellung von Lebensmittelverpackungen, aber auch zur Herstellung von Folien für dekorative Anwendungen eingesetzt werden.

Allerdings ist der Einsatz der bekannten Polyurethan-Formmassen im Kraftfahrzeug-Innenbereich aufgrund der verschärften Forderungen der Automobilindustrie an die zur Herstellung der Armaturentafelhaut eingesetzten Materialien, wonach diese eine Narben- und Heißlichtstabilität bis mindestens 130°C besitzen sollen, nicht gewährleistet.

Aus dem Dokument DE 41 15 508 A1 ist ein Verfahren zur Herstellung von thermoplastisch verarbeitbaren Polyurethanelastomeren (TPU) bekannt, wobei im thermoplastischen Verarbeitungsprozess durch Extrusion oder Spritzguss reaktive, vorzugsweise aromatische Diisocyanate im TPU eingearbeitet werden und danach durch Temperung ein mit starker Molmassenerhöhung verbundener Strukturaufbau stattfindet, der bessere mechanische Eigenschaften aufweist als konventionelle TPU.

Die Erfindung hat sich die Aufgabe gestellt, ein, alternatives Verfahren zur Herstellung von Polyurethan-Formkörpern bereitzustellen, wobei die derart hergestellten Polyurethan-Formkörper eine hohe Heißlichtechtheit sowie eine verbesserte Wärmeformbeständigkeit aufweisen, sowie eine Verwendung für die derart hergestellten Polyurethan-Formkörper anzugeben.

Die Aufgabe wird erfindungsgemäß durch das Verfahren nach Anspruch 1 gelöst.

Aliphatische, lineare, langkettige, thermoplastische Polyurethane werden durch den Zusatz einer latent reaktiven Vernetzer-Komponente, die erst unter den Verarbeitungsbedingungen bei erhöhter Temperatur zu einem höhermolekularen, verzweigten Polyurethan führt, deutlich verbessert. Insbesondere weisen die nach dem erfindungsgemäßen Verfahren hergestellten Polyurethan-Formkörper eine höhere Temperatur- und Heißlichtstabilität sowie Wärmeformbeständigkeit auf, die sich in den nachfolgenden vorteilhaften Eigenschaften widerspiegeln:
- gute Verarbeitbarkeit in Thermoplast-Verarbeitungsverfahren wie Spritzgießen, Schmelzextrusion, Schmelzspinn-, Sinter- oder Schmelzklebeverfahren,
- gutes Kristallisationsverhalten, insbesondere eine schnelle Rekristallisation für einen wirtschaftlichen Verarbeitungsprozeß in den vorgenannten Verfahren,
- hohe Zug-, Einreiß- und Weiterreißfestigkeit,
- gute elastische Eigenschaften,

Bevorzugt verwendete Komponenten a) bis c) sind in den Ansprüchen 2 bis 4 dargelegt.

Erfindungsgemäß werden die Polyurethan-Formkörper hergestellt, indem aus den Komponenten a) bis c) eine thermoplastische Polyurethan-Formmasse hergestellt und in Pulver- oder Granulatform mit der Komponente d) gut homogenisiert, die homogenisierte Masse zu einem Formkörper geformt und bei Temperaturen von 80 bis 240°C nachvernetzt wird.

**Dabei wird** die Komponente d) in fester Form bei Raumtemperatur in einem Taumelmischer durch Auftrommeln auf die aus den Komponenten a) bis c) erhaltene thermoplastische Polyurethan-Formmasse aufgebracht und im Powder-Slush-Verfahren verarbeitet. Die Lagerstabilität des Gemischs aus thermoplastischer Polyurethan-Formmasse und der Vemetzerkomponente d) ist abhängig von deren Reaktivität. So kann z.B. eine Mischung vom einem flüssigen, aliphatischen Di- oder Triisocyanat als Vemetzerkomponente innerhalb von 24 Stunden Lagerzeit bei Raumtemperatur unter den gleichen Verarbeitungsbedingungen im Thermoplast-Verfahren verarbeitet werden, während Mischungen mit festen Isocyanaten als Vernetzungskomponente über mehrere Monate bei Raumtemperatur lagerstabil sind. Dafür werden aliphatische und/oder cycloaliphatische Isocyanate mit Allophanat-, Biuret- oder Uretdion-Struktur mit freien oder blockierten Isocyanatgruppen auf Basis von Hexamethylen-diisocyanat, Isophoron-diisocyanat und/oder Dicydohexylmethandiisocyanat sowie Polyurethan-Prepolymere auf Basis aliphatischer und cycloaliphatischer

Diisocyanate mit freien und/oder blockierten Isocyanatgruppen als Komponente d) verwendet. Die Verarbeitung der aus den Komponenten a) bis c) erhaltenen thermoplastischen Polyurethan-Formmasse und der Vernetzerkomponente d) erfolgt in einem Thermoplast-Verfahren bei erhöhter Temperatur. Durch das gleichzeitige Aufschmelzen und Verfließen des thermoplastischen Polyurethans und der Vernetzungskomponente wird eine weitere innige Vermischung der Komponenten erzielt. Die Vernetzungskomponente wird bei den erhöhten Temperaturen aktiviert und es erfolgt eine Nachvernetzung der aktiven Wasserstoffgruppen über Urethanbindungen sowie Hydroxylgruppen. Die Umsetzung zum erfindungsgemäß hergestellten Polyurethan-Formkörper mit höherer Wärmeform-Beständigkeit ist je nach Reaktivität der Vernetzungskomponente sofort nach dem Verarbeitungsprozeß oder auch erst nach mehreren Tagen Lagerzeit abgeschlossen.

Bevorzugte Verwendungen sind in den Ansprüchen 5 und 6 dargelegt.

Die erfindungsgemäß erhältlichen Polyurethan-Formkörper weisen wie die nachfolgend angegebenen Beispiele zeigen keine mechanischen oder verarbeitungstechnischen Nachteile gegenüber den bekannten aliphatischen thermoplastisch verarbeitbaren Polyurethan-Formmassen auf.

Die so hergestellten Polyurethan-Formkörper besitzen hohe Festigkeits- und gute elastische Eigenschaften und eine hohe Lichtechtheit. Weiterhin sind sie bis mindestens 150°C formstabil, d.h. sie zeigen keine Veränderung der Narbenstabilität bei Verwendung als Oberflächenmaterialien.

In der erfindungsgemäßen Anwendung als Oberflächenmaterial besitzen sie nachfolgende Vorteile:
- trockener; lederartiger Griff,
- eine verbesserte Beständigkeit gegen Löse- und Reinigungsmittel,
- eine verringerte Kratzempfindlichkeit sowie
- eine verbesserte Abriebbeständigkeit.

Weiterhin zeigen die erfindungsgemäß hergestellten Polyurethan-Formkörper in ihrer Verwendung als Schmelzkleber oder Haftmassen für textile Anwendungen
- eine verbesserte Wasch- und Reinigungsbeständigkeit sowie
- eine verbesserte Adhäsion bei höheren Temperaturen.

Die erfindungsgemäß hergestellten Polyurethan-Formkörper können bei ihrer Herstellung noch mit bekannten Füll- und Zuschlagstoffen, Flamm- und Alterungsschutzmitteln sowie Verarbeitungshilfen und Pigmenten versetzt werden.

Die Erfindung wird durch die nachfolgenden Beispiele näher erläutert.

### Beispiel 1

### Zusammensetzung der Mischung

100,00 Gewichtsteile Polycaprolacton mit einem Molekulargewicht von 2000 und einer OH-Zahl von 56,0, 15,57 Gewichtsteile 1,6-Hexandiol, 30,00 Gewichtsteile 1,6-Hexamethylendiisocyanat

### Herstellungsverfahren

### 1. Stufe

Polycaprolacton, 1,6-Hexandiol und 1,6-Hexamethylendiisocyanat werden unter Rühren in einem Reaktionskessel auf 80°C erwärmt. Durch die exotherme Reaktion steigt die Temperatur in etwa 12 Minuten auf 180°C an. Bei dieser Temperatur wird das Produkt auf eine Polytetrafluorethylen-Folie gegossen. Nach etwa 8 Stunden kann die entstandene Platte zu Granulat verarbeitet werden.

Das so erhaltene thermoplastische Polyurethan weist folgende Schmelzeigenschaften auf:
Schmelzpunkt: 160°C,
Schmelzindex nach DIN ISO 1133 bei 2,16 kg Belastung,
gemessen bei 170°C: 17 g/10 min,
gemessen bei 200°C: 60 g/10 min,
gemessen bei 220°C: 144 g/10 min.

### 2. Stufe

100,00 Gewichtsteile des thermoplastischen Polyurethans aus Stufe eins werden mit
8,00 Gewichtsteilen eines Triisocyanats mit einem Molekulargewicht von 478 g/mol und einem Isocyanatgehalt von 16 Gew.% (Kondensationsprodukt von Hexymethylendiisocyanat mit Biuretstruktur)
eine Stunde bei Raumtemperatur in einem Taumelmischer gemischt. Anschließend wird die noch gut rieselfähige, pulverige Masse nach dem bekannten Powder-Slush-Verfahren in einem offenen beheizten Werkzeug bei einer Temperatur von etwa 225°C zu einer 1 mm dicken Folie gesintert.

Folgende Eigenschaften wurden für dieses Material ermittelt:
Schmelzpunkt: 190°C,
Schmelzindex nach DIN ISO 1133 bei 2,16 kg Belastung,
gemessen bei 170°C: nicht meßbar,
gemessen bei 200°C: nicht meßbar,
gemessen bei 220°C: 8 g/10 min;
Wärmealterung eines Formteils in 500 Stunden bei 140°C: keine Veränderung an der Oberfläche, kein Verschmelzen der Narbenstruktur;
Heißlichtalterung in 500 Stunden bei 130°C: keine Verfärbung, keine Veränderung an der Oberfläche, kein Verschmelzen der Narbenstruktur

### Beispiel 2

### Stufe 1

Gemäß Stufe 1 des Beispiels 1 wurde ein thermoplastisches Polyurethan hergestellt.

### Stufe 2

100,00 Gewichtsteile des thermoplastischen Polyurethans aus Stufe eins werden mit
10,00 Gewichtsteilen eines dimeren Isocyanats auf Basis von Isophorondiisocyanat mit Uretdion-Struktur und einem Isocyanatgehalt von 16 Gew.% wurden analog Beispiel 1 umgesetzt.

Folgende Eigenschaften wurden für dieses Material ermittelt:
Schmelzpunkt: 190 bis 195°C,
Schmelzindex nach DIN ISO 1133 bei 2,16 kg Belastung,
gemessen bei 170°C: nicht meßbar,
gemessen bei 200°C: nicht meßbar,
gemessen bei 220°C: 65 g110 min;
Wärmealterung eines Formteils in 500 Stunden bei 140°C: keine Veränderung an der Oberfläche, kein Verschmelzen der Narbenstruktur;
Heißlichtalterung in 500 Stunden bei 130°C: keine Verfärbung, keine Veränderung an der Oberfläche, kein Verschmelzen der Narbenstruktur meßbar;

### Vergleichsbeispiel

Als Vergleichsbeispiel dient ein thermoplastisches Polyurethan, welches gemäß Stufe 1 des Beispiels 1 erhalten wurde.

Das Vergleichsmaterial zeigte einen niedrigeren Schmelzpunkt und den meßbare Schmelzindizes für den gesamten gemessenen Temperaturbereich sowie bei der Wärme- und Heißlichtalterung Veränderungen an der Oberfläche und der Narbenstruktur ab 120°C.

## Patentansprüche

1. Verfahren zur Herstellung eines Polyurethan-Formkörper durch Umsetzung
a) eines oder mehrerer aliphatischer Polyole mit einem Molekulargewicht von 450 bis 6000 g/mol und einer OH-Zahl von 10 bis 235
b) mit aliphatischen und/oder cycloaliphatischen Diisocyanate in einem Äquivalenzverhältnis des Diisocyanats zum Polyol von 1,2 : 1,0 bis 16,0:1,0,
c) Diolen als Kettenverlängerungsmittel mit einem Molekulargewicht von 60 bis 450 g/mol, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 90 bis 105 liegt und
d) einer zur Nachvemetzung geeigneten mindestens bifunktionellen Reaktionskomponente, die mit den endständigen OH-Gruppen der Polyurethankette sowie den aciden Wasserstoffatomen der UrethanGruppen reagieren und zu Verzweigungsreaktionen führen, wobei das durch Umsetzung aus den Komponenten a) bis c) in einer ersten Stufe gebildete thermoplastische Polyurethan mit 0,2 bis 25 Gewichtsteilen der Komponente d) bezogen auf 100 Gewichtsteile des thermoplastischen Polyurethans in einer zweiten Stufe homogen gemischt, zum Formkörper geformt und bei Temperaturen von 80 bis 240°C nachvemetzt ist, **dadurch gekennzeichnet, daß** die Komponente d) in fester Form bei Raumtemperatur in
einem Taumelmischer durch Auftrommeln auf die aus den
Komponenten a) bis c) in der ersten Stufe erhaltene thermoplastische Polyurethan-Formmasse aufgebracht und im Powder-Slush-Verfahren verarbeitet wird, wobei aliphatische und/oder cycloaliphatische Isocyanate mit Allophanat-, Biuret- oder Uretdion-Struktur mit freien oder blockierten Isocyanatgruppen auf
Basis von Hexamethylen-diisocyanat, Isophoron-diisocyanat und/oder Dicyclohexylmethan-diisocyanat sowie Polyurethan-Prepolymere auf Basis aliphatischer und cycloaliphatischer Diisocyanate mit freien und/oder blockierten Isocyanatgruppen als Komponente d) verwendet werden.

2. Verfahren zur Herstellung eines Polyurethan-Formkörper nach Anspruch 1, durch die Verwendung von Polyadipaten auf Basis von Ethylenglykol, Diethylenglykol, Propandiol, Butandiol, Pentandiol, Hexandiol, Neopentylglykol und Kombinationen dieser Glykole, Polycaprolactone, Polycarbonate, Polytetrahydrofuran oder Kombinationen daraus sowie Copolymere der entsprechenden Monomeren oder Gemische aus den genannten Polymeren als Polyolkomponente a).

3. Verfahren zur Herstellung eines Polyurethan-Formkörper nach Anspruch 1 oder Anspruch 2, durch die Verwendung von Hexamethylen-diisocyanat, Methyl-pentamethylen-diisocyanat, Ethyl-butylen diisocyanat, Isophoron-diisocyanat, Cyclohexan-diisocyanat, Methyl cyclohexan-diisocyanat und/oder Dicyclohexylmethan-diisocyanat sowie die entsprechenden Isomerengemische als Komponente b).

4. Verfahren zur Herstellung eines Polyurethan-Formkörper nach einem der Ansprüche 1 bis 3, durch die Verwendung von Ethandiol, Butandiol, Pentandiol, Hexandiol, Diethylenglykol, Dipropylenglykol, Cyclohexandiol, und/oder Polytetramethylenglykole als Komponente c).

5. Verwendung eines Polyurethan-Formkörpers erhältlich nach einem der Ansprüche 1 bis 4 zur Herstellung von Oberflächenmaterialien für den Einsatz im Kraftfahrzeug-Innenbereich.

6. Verwendung eines Polyurethan-Formkörpers erhältlich nach einem der Ansprüche 1 bis 4 zur Herstellung von Schmelzklebern und Haftmassen für textile Anwendungen.

## Revendications

1. Procédé pour la production de corps moulés à base de polyuréthanne, par mise en réaction
a) d'un ou plusieurs polyols aliphatiques ayant une masse moléculaire de 450 à 6 000 g/mole et un indice de groupes OH de 10 à 235
b) avec des diisocyanates aliphatiques et/ou cycloaliphatiques en un rapport d'équivalents du diisocyanate au polyol de 1,2:1,0 à 16,0:1,0,
c) de diols en tant qu'agent d'extension de chaîne, ayant une masse moléculaire de 60 à 450 g/mole, le nombre caractéristique de groupes NCO, obtenu à partir du quotient, multiplié par 100, des rapports d'équivalents des groupes isocyanate à la somme des groupes hydroxy du polyol et de l'agent d'extension de chaîne, se situant dans une plage allant de 90 à 105, et
d) d'un composant réactionnel au moins bifonctionel approprié à la post-réticulation, réagissant avec les groupes OH en bout de chaîne de la chaîne polyuréthanne ainsi qu'avec les atomes d'hydrogène acides des groupes uréthanne et conduisant à des réactions de ramification,
le polyuréthanne thermoplastique formé dans une première étape par la réaction à partir des composants a) à c) étant mélangé de façon homogène, dans une deuxième étape, avec 0,2 à 25 parties en poids du composant d), par rapport à 100 parties en poids du polyuréthanne thermoplastique, moulé en le corps moulé et post-réticulé à des températures de 80 à 240°C,
**caractérisé en ce que** le composant d) est appliqué sous forme solide, dans un mélangeur à tambour basculant, par application au tambour, sur la matière à mouler polyuréthanne thermoplastique obtenue dans la première étape à partir des composants a) à c) et transformé dans le procédé *Powder-Slush,* des isocyanates aliphatiques et/ou cycloaliphatiques à structure allophanate, biuret ou uretdione, comportant des groupes isocyanate libres ou bloqués à base d'hexaméthylène-diisocyanate, d'isophorone-diisocyanate et/ou de dicyclohexylméthane-diisocyanate ainsi que des prépolymères polyuréthanne à base de diisocyanates aliphatiques et cycloaliphatiques à groupes isocyanate libres et/ou bloqués étant utilisés en tant que composant d).

2. Procédé pour la production d'un corps moulé polyuréthanne selon la revendication 1, par l'utilisation de polyadipates à base d'éthylèneglycol, diéthylèneglycol, propanediol, butanediol, pentanediol, hexanediol, néopentylglycol et d'associations de ces glycols, de polycaprolactones, de polycarbonates, de poly-tétrahydrofuranne ou d'associations de ceux-ci, ainsi que de copolymères des monomères correspondants ou de mélanges des polymères cités, en tant que composant polyol a).

3. Procédé pour la production d'un corps moulé polyuréthanne selon la revendication 1 ou la revendication 2, par l'utilisation d'hexaméthylène-diisocyanate, méthyl-pentaméthylène-diisocyanate, éthyl-butylène-diisocyanate, isophorone-diisocyanate, cyclohexane-diisocyanate, méthylcyclohexane-diisocyanate et/ou dicyclohexylméthane-diisocyanate ainsi que des mélanges d'isomères correspondants, en tant que composant b).

4. Procédé pour la production d'un corps moulé polyuréthanne selon l'une quelconque des revendications 1 à 3, par l'utilisation d'éthanediol, butanediol, pentanediol, hexanediol, diéthylèneglycol, dipropylèneglycol, cyclohexanediol et/ou polytétraméthylèneglycols en tant que composant c).

5. Utilisation d'un corps moulé polyuréthanne pouvant être obtenu selon l'une quelconque des revendications 1 à 4, pour la production de matériaux pour surfaces destinés à être utilisés à l'intérieur d'automobiles.

6. Utilisation d'un corps moulé polyuréthanne pouvant être obtenu selon l'une quelconque des revendications 1 à 4, pour la production de colles fusibles et de matières adhésives pour des applications textiles.

## Claims

1. Method for producing a moulded polyurethane body by reacting
a) one or more aliphatic polyols having a molecular weight of 450 to 6000 g/mol and an OH number of 10 to 235,
b) with aliphatic and/or cycloaliphatic diisocyanates in an equivalent ratio of diisocyanate to polyol of 1.2:1.0 to 16.0:1.0,
c) diols as chain lengthening agents having a molecular weight of 60 to 450 g/mol, the NCO index, formed from the quotient, which is multiplied by 100, of the equivalent ratios of isocyanate groups to the sum of the hydroxyl groups of polyol and chain lengthening agent lying within a range of 90 to 105, and
d) an at least bifunctional reaction component, which is suitable for subsequent cross-linking, and which reacts with the terminal OH groups of the polyurethane chain and also with the acidic hydrogen atoms of the urethane groups and leads to branching reactions, the thermoplastic polyurethane formed by conversion from the components a) to c) in a first step being homogeneously mixed in a second step with 0.2 to 25 parts by weight of component d) with respect to 100 parts by weight of the thermoplastic polyurethane, formed into the moulded body, and subsequently cross-linked at temperatures from 80 to 240°C,
**characterized in that** component d) in solid form at room temperature is applied in a tumbling mixer by tumbling onto the thermoplastic polyurethane moulding material obtained from components a) to c) in the first step and is processed by the powder slush method, with aliphatic and/or cycloaliphatic isocyanates having an allophanate, biuret or uretdione structure with free or blocked isocyanate groups based on hexamethylene diisocyanate, isophorone diisocyanate and dicyclohexylmethane diisocyanate and also polyurethane prepolymers based on aliphatic and cycloaliphatic diisocyanates with free and/or blocked isocyanate groups being used as component d).

2. Method for producing a moulded polyurethane body according to Claim 1, through the use of polyadipates based on ethylene glycol, diethylene glycol, propanediol, butanediol, pentanediol, hexanediol, neopentyl glycol and combinations of these glycols, polycaprolactones, polycarbonates, polytetrahydrofuran or combinations thereof and also copolymers of the corresponding monomers or mixtures of the stated polymers as polyol component a).

3. Method for producing a moulded polyurethane body according to Claim 1 or Claim 2, through the use of hexamethylene diisocyanate, methylpentamethylene diisocyanate, ethylbutylene diisocyanate, isophorone diisocyanate, cyclohexane diisocyanate, methylcyclohexane diisocyanate and/or dicyclohexylmethane diisocyanate and also the corresponding isomer mixtures as component b).

4. Method for producing a moulded polyurethane body according to one of Claims 1 to 3, through the use of ethanediol, butanediol, pentanediol, hexanediol, diethylene glycol, dipropylene glycol, cyclohexanediol and/or polytetramethylene glycols as component c).

5. Use of a moulded polyurethane body obtainable according to one of Claims 1 to 4 for producing surface materials for application in the interior of a motor vehicle.

6. Use of a moulded polyurethane body obtainable according to one of Claims 1 to 4 for producing hot-melt adhesives and adhesive materials for textile applications.
